# EUROPÄISCHE PATENTSCHRIFT

(11) **EP 1 645 792 B1**
(45) Veröffentlichungstag und Bekanntmachung des Hinweises auf die Patenterteilung: **05.03.2008**
(21) Anmeldenummer: 05017686.6
(22) Anmeldetag: 13.08.2005
(51) Int. Cl.: F16L 41/16, F16L 55/105, F16K 3/08

(54) **Anbohrvorrichtung**
Tapping device
Dispositif de perçage

(30) Priorität: 01.10.2004 DE 102004047787
(43) Veröffentlichungstag der Anmeldung: 12.04.2006
(73) Patentinhaber: Erhard GmbH & Co. KG, 89522 Heidenheim (DE)
(72) Erfinder: Jäger, Oliver, 89520 Heidenheim (DE)
(74) Vertreter: Dr. Weitzel & Partner

(56) Entgegenhaltungen:
- DE-U1-7202004 003 80
- FR-A- 821 841

## Beschreibung

Die Erfindung betrifft eine Vorrichtung zum Anbohren einer Rohrleitung, die dazu dient, ein Medium zu führen, beispielsweise ein Gas oder eine Flüssigkeit. Dabei werden solche Anbohrvorrichtungen auch im Betrieb der Rohrleitung eingesetzt, somit dann, wenn die Rohrleitung ein unter Druck stehendes Medium führt. Siehe DE 203 05 736 U1, DE 20 2004 003 807 U1 oder FR 821 841.

Die wesentlichen Bauteile einer solchen Vorrichtung sind die folgenden:
Die Vorrichtung umfasst ein zweigeteiltes Gehäuse. Das eine, erste Gehäuseteil (Unterteil) wird auf die Rohrleitung aufgesetzt und an dieser fixiert. Es ist dem gemäß derart gestaltet, dass es die äußere Mantelfläche der Rohrleitung auf einem Teil ihres Umfanges umfasst. Die Fixierung erfolgt durch Rohrschellen oder Bügel. Ein zweites Gehäuseteil (Oberteil) ist auf das erste Gehäuseteil aufgesetzt. Zwischen diesen beiden befindet sich eine Sperrscheibe. Das erste Gehäuseteil weist einen Anschlussstutzen auf, der nach dem Durchbohren der Wandung der Rohrleitung eine leitende Verbindung nach außen herstellt. Das zweite Gehäuseteil weist eine Führungsbuchse zum Einsetzen eines Bohrers sowie den Anschluss einer Rohrleitung auf. Die Sperrscheibe weist eine Bohrung auf. Sie ist bewegbar zwischen einer Arbeitsposition und einer Sperrposition. In der Arbeitsposition fluchten der Anschlussstutzen des ersten Gehäuseteils, die Bohrung der Sperrscheibe und die Führungsbuchse des zweiten Gehäuseteils miteinander. In der Sperrposition sperrt sie den Anschlussstutzen des ersten Gehäuseteiles gegen die Führungsbuchse des zweites Gehäuseteiles ab.

Bei einer bekannten Ausführungsform einer solchen Anbohrvorrichtung ist die Scheibe an ihrem Außenumfang mit einer Verzahnung versehen. Es ist ein Ritzel vorgesehen, dessen Zähne in die Verzahnung der Sperrscheibe eingreifen. Die Bohrung ist gegenüber der Drehachse der Sperrscheibe exzentrisch angeordnet. Die Sperrscheibe kann mittels des Ritzels verdreht werden zwischen der Arbeitsposition und der Sperrposition.

Die Sperrscheibe ist sowohl gegen den Anschlussstutzen des ersten Gehäuseteiles als auch gegen die Führungsbuchse des zweiten Gehäuseteiles abgedichtet. Zu diesem Zwecke sind beidseits der Sperrscheibe Dichtringe vorgesehen. Der eine dieser Dichtringe befindet sich im ersten Gehäuseteil, und zwar dort, wo dessen Anschlussstutzen an die der Hauptleitung nahe Fläche der Sperrscheibe angrenzt. Der zweite Dichtungsring befindet sich im zweiten Gehäuseteil, und zwar dort, wo der Führungsstutzen an die der Hauptleitung ferne Fläche der Sperrscheibe angrenzt.

Die Dichtwirkung der beiden Dichtringe ist dann gewährleistet, wenn sich die Bohrung der Sperrscheibe in Arbeitsposition befindet (erste Dichtposition), in welcher die beiden Dichtringe den Umfang der Bohrung umschließen, und somit eine leitende Verbindung zwischen dem Anschlussstutzen und der Führungsbuchse durch die Bohrung der Sperrscheibe hindurch besteht.

Findet sich jedoch die Sperrscheibe während einer längeren Zeitspanne in ihrer Sperrposition (zweite Dichtposition, wenn Bohrung der Zahnscheibe aus dem Wirkungsbereich der Dichtringe herausgedreht ist), so kann es zu Ablagerungen von Partikeln auf der mediumberührten Fläche der Sperrscheibe kommen. Dies tritt insbesondere bei Flüssigkeiten auf. Wird die Sperrscheibe zwischen ihren beiden Positionen verschoben, so greifen die Partikel an den Dichtelementen an, was zu Verschleiß der Dichtelemente führt.

Ein weiterer Nachteil besteht darin, dass beim Verfahren oder Verschieben der Sperrscheibe zwischen ihren beiden Positionen Betriebsmedium in den GehäuseInnenraum eindringen kann und dort stehen bleibt.

Gelegentlich wird beim Anbohrvorgang die Sperrscheibe durch den Bohrer oder durch Bohrspäne beschädigt. Dies tritt vor allem dann auf, wenn die Sperrscheibe sich nicht vollständig in ihrer Arbeitsposition befindet, somit nicht vollständig geöffnet ist. Bei nachfolgenden Betätigungen der Sperrscheibe werden nämlich die beschädigten Stellen über die Dichtungen hinweg bewegt. Diese werden hierbei beschädigt, so dass sie keinen dichten Abschluss mehr erzielen.

Der Erfindung liegt die Aufgabe zugrunde, eine Anbohrvorrichtung der eingangs beschriebenen Art derart zu gestalten, dass die Gefahr von Ablagerungen von unerwünschten Partikeln oder auch nur das Verweilen von Medium in Toträumen vermindert oder vermieden wird. Es sollen somit möglichst wenig Ablagerungen entstehen, weder auf den der Sperrscheibe zugewandten Gehäuseflächen, noch auf der Sperrscheibe selbst. Ferner sollen Schäden durch Fehler beim Anbohren oder bei nicht vollständiger Öffnung der Sperrscheibe oder durch am Bohrer anhaftende Späne beim Herausfahren des Bohrers aus der Vorrichtung vermieden werden.

Diese Aufgabe wird durch die Merkmale von Anspruch 1 gelöst.

Der wesentliche Gedanke besteht darin, die Sperrscheibe selbst mit einem dichtenden Belag zu versehen, somit die Dichtfunktion von besonderen Dichtelementen wie den genannten Dichtringen zu verlagern auf die Sperrscheibe selbst. Als Dichtungsmaterial kommen elastomere Werkstoffe wie Gummi oder sonstige Werkstoffe in Betracht.

Durch das Aufbringen einer solchen dichtenden Beschichtung wird vermieden, dass sich nennenswerte Ablagerungen auf der Sperrscheibe niederschlagen, vor allem auf dem absperrenden Bereich der Sperrscheibe.

Eine erfindungsgemäße Sperrscheibe ist im Allgemeinen aus einem metallischen Kern, beispielsweise aus Edelstahl, und einer auf diesen aufgebrachten Beschichtung aufgebaut. Es ist aber auch denkbar, die gesamte Sperrscheibe aus einem entsprechenden Material herzustellen.

Die Erfindung ist anhand der Zeichnung näher erläutert. Darin ist im Einzelnen folgendes dargestellt:
- Figur 1: zeigt einen Schnitt durch eine Anbohrvorrichtung sowie durch eine Hauptleitung in einer durch die Längsachse der Hauptleitung gelegten Ebene.
- Figur 2: zeigt die zugehörende Absperrscheibe in einer Draufsicht von einer ihrer beiden Seitenflächen.
- Figur 3: zeigt den Gegenstand von Figur 2 im Schnitt durch die senkrechte Mittelachse.
- Figur 4: zeigt einen Ausschnitt Z aus dem Gegenstand von Figur 2 in vergrößertem Maßstab.
- Figur 5: zeigt eine Schnittansicht gemäß der Schnittlinie A - A in Figur 2.

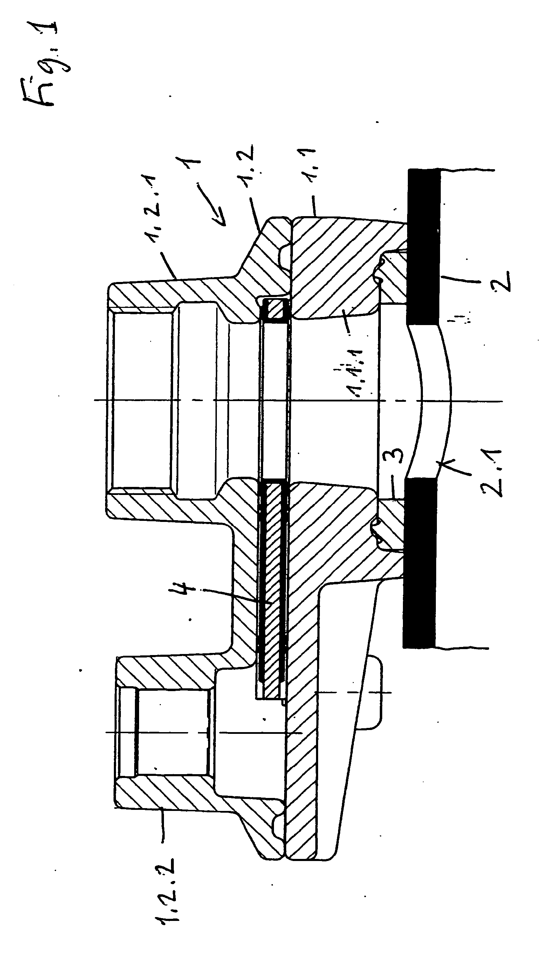

Die in Figur 1 gezeigte Anbohrvorrichtung umfasst ein Gehäuse 1. Dieses weist ein erstes Gehäuseteil 1.1 und ein zweites Gehäuseteil 1.2 auf. Das zweite Gehäuseteil 1.2 sitzt auf einer Rohrleitung 2. Dabei ist eine elastomere Dichtung 3 zwischengefügt. Die Rohrleitung 2 ist bereits mit einer Bohrung 2.1 versehen.

Das wesentliche Bauteil der Vorrichtung ist eine Sperrscheibe 4. Diese umfasst einen Stahlkern 4.1 und eine Kunststoffbeschichtung 4.2.

Das erste Gehäuseteil umfasst einen Anschlussstutzen 1.1.1. Das zweite Gehäuseteil umfasst eine Führungsbuchse 1.2.1. Dieses hat ein Innengewinde und dient der Aufnahme eines hier nicht gezeigten Bohrwerkzeugs bzw. dem Anschluss einer weiteren Rohrleitung.

Man erkennt ferner ein Gehäuseteil 1.2.2. Dieses enthält ein hier nicht dargestelltes Ritzel. Die Sperrscheibe 4 weist auf einem Teil ihres Umfanges einen Zahnkranz auf. Der Zahnkranz der Sperrscheibe 4 und die Zähne des Ritzels kämmen miteinander.

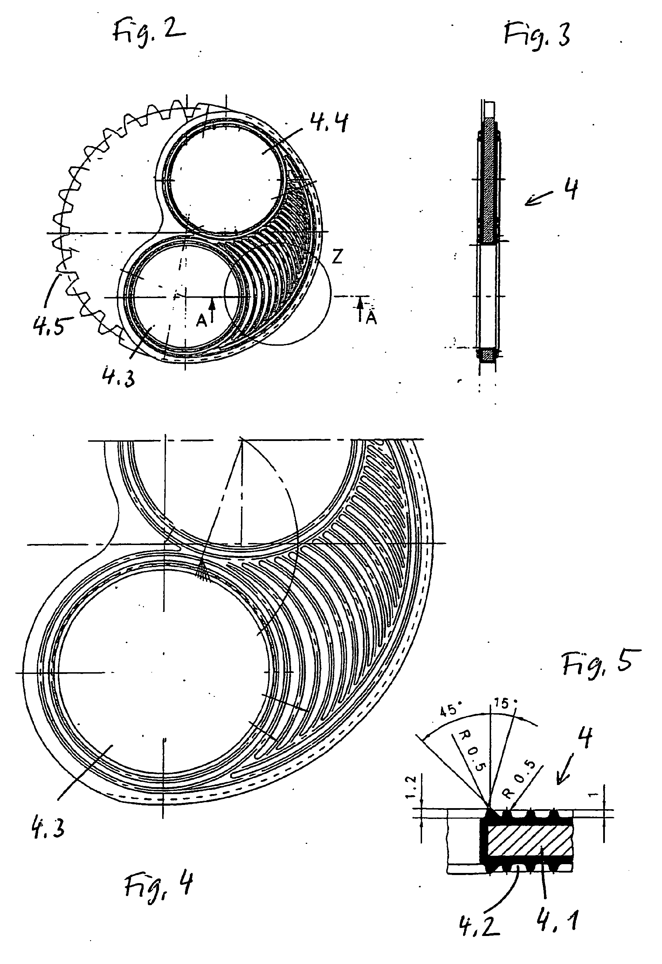

Die Figuren 2 bis 5 zeigen die Sperrscheibe 4 in ihren Einzelheiten. In Figur 2 erkennt man die Bohrung 4.3 der Sperrscheibe 4, ferner die Absperrfläche 4.4, die in der Sperrposition das Medium absperrt. Ein Zahnkranz 4.5 erstreckt sich nur über einen Teil des Umfanges der Sperrscheibe 4 - im vorliegenden Fall um weniger als 180 Grad.

Entscheidend ist die Beschichtung, die im vorliegenden Falle aus einem Elastomer besteht. Die Beschichtung umgibt die Bohrung 4.3 und die Absperrfläche 4.4 der Sperrscheibe 4, ferner jenen dazwischenliegenden Flächenbereich der Sperrscheibe 4, der dem Zahnkranz 4.5 gegenüberliegt. Der beschichtete Flächenbereich ist annähernd nierenförmig.

Wie man besonders gut aus Figur 4 in Verbindung mit Figur 5 erkennt, weist die Beschichtung kreisbogenförmige Rippen auf. Diese Rippen bilden Dichtlippen. Sie sorgen für eine permanente Dichtpressung zwischen den beiden Gehäuseteilen 1.1 und 1.2 über den gesamten Verdrehweg der Sperrscheibe hinweg. Auf diese Weise wird verhindert, dass Betriebsmedium in das Gehäuse eindringt, das heißt in die Zwischenräume zwischen der Sperrscheibe 4 einerseits und den dieser zugewandten Flächen der beiden Gehäuseteile.

Wichtig sind die geschlossenen, kreisförmigen Dichtringe, die die Bohrung 4.3 beziehungsweise 4.4 umgeben.

Die zwischen den Rippensegmenten befindlichen Täler dienen als Verdrängungsraum für das elastomere Material, das in eingebautem Zustand unter Pressung verdrängt wird.

Fällt ein Bohrspan an, so gelangt dieser an die erste der genannten Dichtrippen. Wenn auch diese beschädigt wird, so sorgen die nachfolgenden Dichtrippen für eine perfekte Abdichtung.

Figur 5 lässt erkennen, dass die erste Dichtrippe eine etwas andere Konfiguration als die nachfolgenden hat, und auch mehr Material umfasst. Sie ist somit besonders stark ausgebildet und hat eine steilere Eingangsflanke, als die nachfolgenden Dichtrippensegmente. Außerdem ist sie etwas höher, als die übrigen Dichtrippensegmente - siehe die Zahlenangaben.

Die Erfindung ist nicht nur anwendbar bei Sperrscheiben der hier gezeigten Bauart, somit bei solchen Sperrscheiben, die kreisrund sind und eine in Bezug auf ihre Drehachse exzentrische Bohrung aufweisen. Die Erfindung lässt sich dem gemäß auch anwenden bei Sperrscheiben, die zwischen der Sperrposition und der Arbeitsposition linear verschiebbar sind.

Die Sperrscheibe 4 kann voll und ganz aus einem elastomeren Material bestehen. Sie kann auch aus einem Kunststoffkern und einer elastomeren Beschichtung bestehen.

## Patentansprüche

1. Anbohrvorrichtung zum Anbohren einer flüssigkeits- oder gasführenden Hauptleitung (2), an die eine Abzweigleitung angeschlossen werden soll, mit den folgenden Merkmalen:
1.1 mit einem zweiteiligen Gehäuse (1.1, 1.2);
1.2 ein erstes, der Hauptleitung (2) nahes Gehäuseteil (1.1) ist auf die Hauptleitung (2) aufsetzbar und an dieser fixierbar, und weist einen Anschlussstutzen (1.1.1) auf, der mit der Hauptleitung (2) nach dem Bohren in leitender Verbindung steht;
1.3 ein zweites, der Hauptleitung (2) fernes Gehäuseteil (1.2) weist eine Führungsbuchse (1.2.1) zum Ansetzen eines Bohrers und Anschluss einer weiteren Leitung auf;
1.4 zwischen den beiden Gehäuseteilen (1.1, 1.2) ist eine Sperrscheibe (4) zwischengefügt, die gegen das Gehäuse (1.1, 1.2) abgedichtet ist;
1.5 die Sperrscheibe (4) weist eine Bohrung (4.3) auf, die zum Hindurchführen des Bohrers dient;
1.6 die Sperrscheibe (4) ist verschiebbar oder verdrehbar zwischen einer Arbeitsposition, in der ihre Bohrung (4.3) mit der Führungsbuchse (1.2.1) fluchtet, und einer Sperrposition, in der der Anschlussstutzen (1.1.1) des ersten Gehäuseteils (1.1) abgesperrt ist;
1.7 die Sperrscheibe (4) ist auch an ihren beiden Seiten mit einem dichtenden Material beschichtet; **gekennzeichnet durch** die folgenden Merkmale:
1.8 die Sperrscheibe (4) ist nur auf den folgenden Bereichen beschichtet:
(a) auf dem Umfang ihrer Bohrung (4.3);
(b) auf dem Umfang der Absperrfläche (4.4), die den Anschlussstutzen (1.1.1) des ersten Gehäuseteiles (1.1) in der Sperrposition absperrt;
(c) auf der zwischen diesen beiden liegenden Fläche;
1.9 die Beschichtung umfasst Rippen, die gegen die benachbarte Fläche des Gehäuses gerichtet sind und dichtend an dieser anliegen;
1.10 die Rippen sind bogenförmig und weisen jeweils einen Radius auf, der wenigstens annähernd dem Radius der Bohrung (4.3) der Sperrscheibe (4) entspricht;
1.11 die Sperrscheibe (4) weist einen Zahnkranz auf, mit dem die Verzahnung eines Ritzels kämmt;
1.12 der Zahnkranz erstreckt sich nur über einen Teil des Umfanges der Sperrscheibe (4).

2. Anbohrvorrichtung nach Anspruch 1, **dadurch gekennzeichnet, dass** die beiden Seiten der Sperrscheibe (4) nur teilweise mit einem dichtenden Material beschichtet sind.

3. Anbohrvorrichtung nach Anspruch 1 oder 2, **gekennzeichnet durch** die folgenden Merkmale:
3.1 die Sperrscheibe (4) ist in Bezug auf die Führungsbuchse (1.2.1) exzentrisch gelagert und um eine Drehachse verdrehbar;
3.2 die Sperrscheibe (4) ist zum Zwecke des Einstellens der Arbeitsbeziehungsweise Sperrposition verdrehbar.

4. Anbohrvorrichtung nach einem der Ansprüche 1 bis 3, **dadurch gekennzeichnet, dass** die Sperrscheibe (4) aus einem elastomeren Material besteht.

## Claims

1. A tapping apparatus for tapping a liquid- or gas-conducting main line (2), to which a branch line is to be connected, having the following features:
1.1. a two-part housing (1.1, 1.2);
1.2. a first housing part (1.1) which is close to the main line (2) can be placed on the main line (2) and can be attached to the same, and comprises a pipe nipple (1,1,1) which is in conductive connection with the main line (2) after the tapping;
1.3. a second housing part (1,2) which is remote of the main line (2) comprises a guide bush (1,2,1) for setting a drill and for connecting a further line;
1.4. a blanking plate (4) is interposed between the two housing parts (1.1, 1.2) which is sealed against the housing (1,1, 1,2);
1.5. the blanking plate (4) comprises a bore (4,3) which is guided for guiding through the drill;
1.6. the blanking plate (4) is displaceable or rotatable between a working position in which its bore (4.3) is in alignment with the guide bush (1,2.1) and a blocking position in which the pipe nipple (1.1.1) of the first housing part (1.1) is blocked;
1.7. the blanking plate (4) is also coated on both of its sides with a sealing material, **characterized by** the following features:
1.8. the blanking plate (4) is only coated in the following areas:
(a) on the circumference of its bore (4.3);
(b) on the circumference of the blocking surface (4.4) which blocks the pipe nipple (1.1.1) of the first housing part (1.1) in the blocked position;
(c) on the surface disposed between the latter two;
1.9. the coating comprises ribs which face towards the adjacent surface of the housing and rest in a sealing manner on the same;
1.10. the ribs are arched and each have a radius which corresponds at least approximately to the radius of the bore (4.3) of the blanking plate (4);
1.11. the blanking disk (4) comprises a gear ring with which the gearing of pinion gear combs;
1.12. the gear ring extends only over a portion of the circumference of the blanking plate (4).

2. A tapping apparatus according to claim 1, **characterized in that** the two sides of the blanking disk (4) are coated only partly with a sealing material.

3. A tapping apparatus according to claim 1 or 2, **characterized by** the following features:
3.1. the blanking disk (4) is held eccentrically with respect to the guide bush (1.2.1) and is rotatable about a rotating axis;
3.2. the blanking disk (4) is rotatable for setting the working or blocking position.

4. A tapping apparatus according to one of the claims 1 to 3, **characterized in that** the blanking disk (4) is made of an elastomeric material.

## Revendications

1. Dispositif de perçage pour le perçage d'une conduite principale (2) acheminant un liquide ou un gaz à laquelle doit être raccordée une conduite de ramification, ayant les caractéristiques suivantes :
1.1 avec un boîtier (1.1, 1.2) en deux parties ;
1.2 une première partie de boîtier (1.1) proche de la conduite principale (2) peut être posée sur la conduite principale (2) et fixée sur celle-ci et possède une tubulure de raccordement (1.1.1) qui est en communication passante avec la conduite principale (2) après le perçage ;
1.3 une deuxième partie de boîtier (1.2) distante de la conduite principale (2) possède une douille de guidage (1.2.1) pour la pose d'une perceuse et le raccordement d'une autre conduite ;
1.4 une plaque d'isolement (4) est intercalée entre les deux parties de boîtier (1,1, 1.2) et assure l'étanchéité par rapport au boîtier (1.1, 1.2) ;
1.5 la plaque d'isolement (4) présente un trou (4.3) servant au passage de la perceuse ;
1.6 la plaque d'isolement (4) peut être déplacée en translation ou tournée entre une position de travail dans laquelle son trou (4.3) est aligné avec la douille de guidage (1.2.1) et une position d'isolement dans laquelle la tubulure de raccordement (1.1.1) est isolée de la première partie de boîtier (1.1) ;
1.7 la plaque d'isolement (4) est également revêtue sur ses deux faces d'un matériau réalisant une étanchéité ;
**caractérisé en ce que** :
1.8 la plaque d'isolement (4) n'est revêtue que dans les zones suivantes :
(a) sur la circonférence de son trou (4.3) ;
(b) sur la circonférence de la surface d'isolement (4.4) qui isole la tubulure de raccordement (1.1.1) de la première partie de boîtier (1,1) dans la position d'Isolement ;
(c) sur la surface située entre celles-ci ;
1.9 le revêtement comporte des nervures qui sont orientées vers la surface voisine du boîtier et reposent sur celui-ci de façon étanche ;
1.10 les nervures sont en forme d'arc et présentent chacune un rayon au moins approximativement égal au rayon du trou (4.3) de la plaque d'isolement (4) ;
1.11 la plaque d'isolement (4) présente une couronne dentée qui engrène avec la denture d'un pignon ;
1.12 la couronne dentée s'étend seulement sur une partie de la circonférence de la plaque d'isolement (4).

2. Dispositif de perçage selon la revendication 1, **caractérisé en ce que** les deux faces de la plaque d'isolement (4) ne sont revêtues que partiellement d'un matériau réalisant l'étanchéité.

3. Dispositif de perçage selon la revendication 1 ou 2, **caractérisé en ce que** ;
3.1 la plaque d'isolement (4) est supportée en position excentrée par rapport à la douille de guidage (1.2.1) et avec possibilité de rotation autour d'un axe de rotation ;
3.2 la plaque d'isolement (4) peut tourner en vue de l'ajustement de la position de travail ou d'isolement.

4. Dispositif de perçage selon l'une des revendications 1 à 3, **caractérisé en ce que** la plaque d'isolement (4) se compose d'un matériau élastomère.
